# EUROPEAN PATENT APPLICATION

(11) **EP 4 609 749 A1**
(43) Date of publication of application: **03.09.2025**
(21) Application number: 23916389.2
(22) Date of filing: 31.10.2023
(51) Int. Cl.: A45C 11/00, H04B 1/3888, A45C 13/00

(54) **CASE INCLUDING STRUCTURE FOR RECEIVING ELECTRONIC PEN**

(30) Priority: 12.01.2023 KR 20230004889; 06.02.2023 KR 20230015506
(71) Applicant: Samsung Electronics Co., Ltd., Suwon-si, Gyeonggi-do 16677 (KR)
(72) Inventor: KIM, Taeyang, Suwon-si Gyeonggi-do 16677 (KR)
(74) Representative: Nederlandsch Octrooibureau
(86) International application number: PCT/KR2023/017114
(87) International publication number: WO 2024/150906

(57) **Abstract**

The case according to an embodiment comprises a plate and a receiving member disposed on one surface of the plate and configured to receive at least a part of an electronic pen. The receiving member comprises a receiving space for receiving one end of the electronic pen, a first applying part for applying a force to the other end opposite to the one end of the electronic pen in a direction toward the receiving space, so that the one end of the electronic pen is inserted into the receiving space and, a second applying part for applying a force to the electronic pen in a direction toward the one surface of the plate, so that the electronic pen is seated on the receiving member, wherein a part of the receiving member is opened toward the outside of the receiving member, so that at least a part of the electronic pen is exposed to the outside of the receiving member.

## Description

### [Technical Field]

The present disclosure relates to a case including a structure for receiving an electronic pen.

### [Background Art]

An electronic device may be exposed to various environments, by being carried by a user. A case may protect the electronic device exposed to various environments, by being detachably coupled to the electronic device. For example, the case may protect the electronic device from an impact transmitted to the electronic device from the outside of the electronic device. In order to meet a demand of the user, the case may have various functions in addition to a function for protecting the electronic device.

The above-described information may be provided as a related art for the purpose of helping understanding of the present disclosure. No argument or decision is made as to whether any of the above description may be applied as a prior art related to the present disclosure.

### [Disclosure]

### [Technical Solution]

According to an embodiment, a case detachably coupled to an electronic device is provided. According to an embodiment, the case may comprise a plate supporting the electronic device. According to an embodiment, the case may comprise a storing member for storing at least a portion of an electronic pen disposed on a surface of the plate. According to an embodiment, the storing member may include a receiving space receiving an end of the electronic pen. According to an embodiment, the storing member may include a first actuating portion applying a force in a direction toward the receiving space to another end of the electronic pen opposite to the end of the electronic pen such that the end of the electronic pen is inserted into the receiving space. According to an embodiment, the storing member may include a second actuating portion, disposed between the receiving space and the first actuating portion, and applying a force in a direction toward the surface of the plate to the electronic pen such that the electronic pen is seated onto the storing member. According to an embodiment, a portion of the storing member may open toward an outside of the storing member such that at least a portion of the electronic pen is exposed outside the storing member.

According to an embodiment, a case detachably coupled to an electronic device is provided. According to an embodiment, the case may comprise a plate supporting the electronic device. According to an embodiment, the case may comprise a storing member for storing at least a portion of an electronic pen disposed on a surface of the plate. According to an embodiment, the storing member may include a seating portion, having a first thickness, on which the electronic pen is seated. According to an embodiment, the storing member may include a receiving space receiving an end of the electronic pen. According to an embodiment, the storing member may include a first protruding portion, having a second thickness greater than the first thickness, surrounding the receiving space, and connected to an end of the seating portion. According to an embodiment, the storing member may include a first actuating portion applying a force in a direction toward the receiving space to another end of the electronic pen opposite to the end of the electronic pen such that the end of the electronic pen is inserted into the receiving space. According to an embodiment, the storing member may include a second protruding portion, having a third thickness greater than the first thickness, surrounding the first actuating portion, and connected to another end of the seating portion opposite to the end of the seating portion. According to an embodiment, the storing member may include a second actuating portion, disposed in the seating portion, applying a force in a direction toward the surface of the plate to the electronic pen such that the electronic pen is seated onto the storing member.

### [Description of the Drawings]

FIG. 1A is a perspective view illustrating an example in which an exemplary case and an electronic device are coupled according to an embodiment.
FIG. 1B is a top plan view illustrating an example in which an exemplary case and an electronic device are coupled according to an embodiment.
FIG. 1C is an exploded perspective view of an exemplary case according to an embodiment.
FIG. 2 is a cross-sectional view illustrating an example of an exemplary case cut along line A-A' of FIG. 1B according to an embodiment.
FIG. 3A is a perspective view of an exemplary case according to an embodiment.
FIG. 3B is a cross-sectional view illustrating an example of an exemplary case cut along line B-B' of FIG. 1B according to an embodiment.
FIG. 4A is a top plan view of an exemplary case according to an embodiment.
FIG. 4B is a cross-sectional view illustrating an example of an exemplary case cut along line C-C' of FIG. 4A according to an embodiment.
FIG. 5 is a cross-sectional view illustrating an example of an exemplary case according to an embodiment.

### [Mode for Invention]

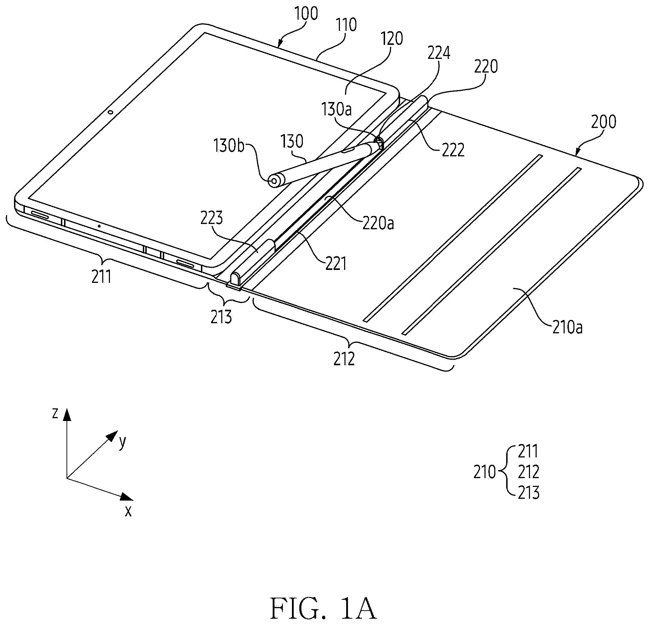

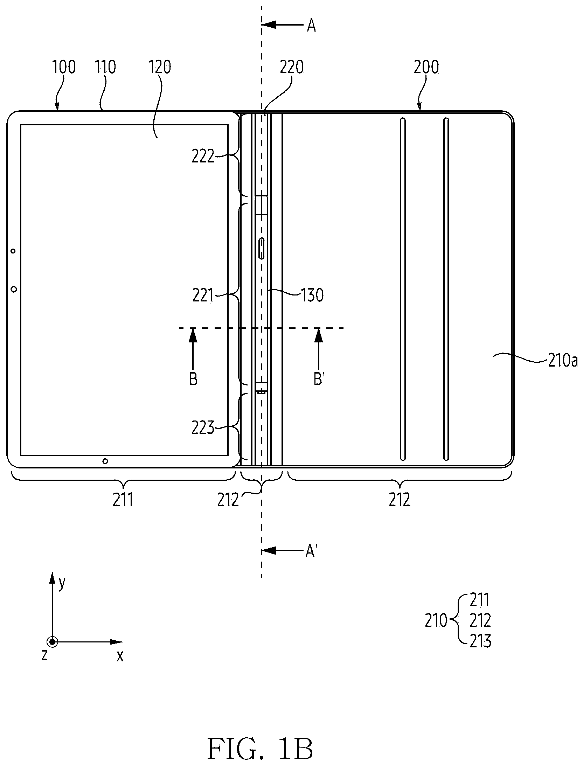

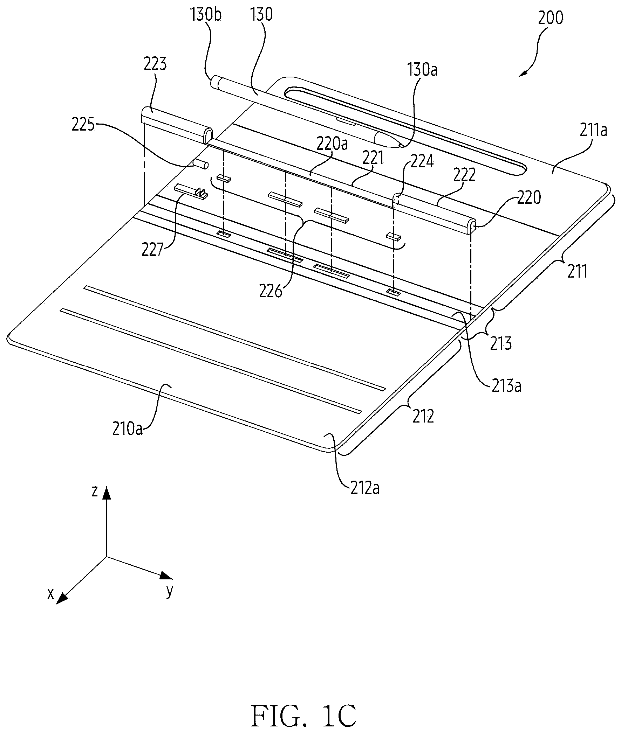

FIG. 1A is a perspective view illustrating an example in which an exemplary case and an electronic device are coupled according to an embodiment, FIG. 1B is a top plan view illustrating an example in which an exemplary case and an electronic device are coupled according to an embodiment, and FIG. 1C is an exploded perspective view of an exemplary case according to an embodiment.

Referring to FIGS. 1A, 1B, and 1C, according to an embodiment, an electronic device 100 may be detachably coupled to a case 200. The electronic device 100 may be disposed on the case 200. According to an embodiment, the electronic device 100 may include a housing 110 and a display 120.

According to an embodiment, the housing 110 may define at least a portion of an outer surface of the electronic device 100. For example, the housing 110 may define at least a portion of a rear surface and a side surface of the electronic device 100. The rear surface of the electronic device 100 may mean a surface opposite to a front surface of the electronic device 100 facing a user while the user is provided with visual information through the electronic device 100. The side surface of the electronic device 100 may mean a surface connecting the front surface of the electronic device 100 and the rear surface of the electronic device 100. The housing 110 may provide an internal space in which at least a portion of components of the electronic device 100 are disposed. For example, the housing 110 may receive various electronic components of the electronic device 100 to provide various functions to the user. According to an embodiment, the housing 110 may directly contact the case 200 in a state in which the electronic device 100 and the case 200 are coupled to each other. For example, the housing 110 may be disposed on the case 200 in the state in which the electronic device 100 and the case 200 are coupled to each other.

According to an embodiment, the display 120 may provide visual information to the user. The display 120 may be configured to emit light for providing visual content to the user. According to an embodiment, the display 120 may be disposed on the housing 110. The display 120 may be coupled to the housing 110. For example, the display 120 may define at least a portion of the front surface of the electronic device 100 by being disposed on the housing 110. For example, the display 120 may face the user while the user is provided with visual information through the electronic device 100.

According to an embodiment, an electronic pen 130 may be configured to transmit a signal corresponding to an input of the user to the electronic device 100. The electronic pen 130 may be configured to transmit a signal indicating an input of the user received on the display 120 to the electronic device 100. The electronic pen 130 may be configured to transmit a signal indicating an input of the user received above the display 120 to the electronic device 100. For example, the electronic pen 130 may be configured to transmit an electromagnetic signal corresponding to an input of the user to the electronic device 100. For example, the electronic pen 130 may include a coil (not illustrated) for transmitting a user input to the electronic device 100 through an electromagnetic signal. For example, the electronic device 100 may include an electromagnetic induction panel (not illustrated) for receiving a user input from the electronic pen 130 through an electromagnetic signal. For example, the electronic pen 130 may include an electro-magnetic resonance (EMR) method. For example, the electromagnetic induction panel of the electronic device 100 may transmit a first electromagnetic signal that causes electromagnetic resonance in the electronic pen 130 to the electronic pen 130. The electronic pen 130 may obtain a second electromagnetic signal by a current caused by electromagnetic induction in the electronic pen 130 based on receiving the first electromagnetic signal. The electronic pen 130 may transmit the second electromagnetic signal causing electromagnetic resonance in the electronic device 100 to the electromagnetic induction panel of the electronic device 100. The electronic device 100 may obtain a third electromagnetic signal by a current caused by electromagnetic induction based on receiving the second electromagnetic signal through the electromagnetic induction panel. The electronic device 100 may identify a type of the user input from the electronic pen 130 based on identifying a phase of the third electromagnetic signal. For example, the electronic device 100 may identify the user input from the electronic pen 130 as a touch input on the display 120 based on identifying that the phase of the third electromagnetic signal is less than or equal to a first threshold value. For example, the electronic device 100 may identify the user input from the electronic pen 130 as a hovering input above the display 120 based on identifying that the phase of the third electromagnetic signal is greater than the first threshold value. The electronic device 100 may obtain information on a position of the electronic pen 130 based on the third electromagnetic signal. For example, the information on the position of the electronic pen 130 may include coordinates on the display 120 corresponding to the position of the electronic pen 130 above the display 120. However, an operation method of the electronic pen 130 is not limited thereto. For example, the electronic device 100 may identify the user input from the electronic pen 130 through a capacitive sensor in the display 120. For example, the electronic pen 130 may include an active electrostatic (AES) type, a pressure-sensitive type, or an infrared/ultrasonic type pen.

According to an embodiment, the electronic pen 130 may substantially have a shape of a pen. For example, the electronic pen 130 may be referred to as a stylus pen. For example, an end 130a of the electronic pen 130 may have a shape of a pen tip. For example, the electronic pen 130, and the end 130a of the electronic pen 130 may include a material having flexibility. For example, another end 130b of the electronic pen 130 may be opposite to the end 130a of the electronic pen 130. For example, a length of the electronic pen 130 may be defined as a distance between the end 130a of the electronic pen 130 and the other end 130b of the electronic pen 130. A length of a component may mean a distance in a direction (e.g., a +y direction or a -y direction) parallel to a direction (e.g., the -y direction) from the end 130a of the electronic pen 130 toward the other end 130b of the electronic pen 130, and the corresponding expression may be utilized substantially the same below unless otherwise stated.

According to an embodiment, the case 200 may protect the electronic device 100, by being detachably coupled to the electronic device 100. The case 200 may buffer an impact transmitted to the electronic device 100 from the outside of the electronic device 100. According to an embodiment, the case 200 may include a plate 210 and/or a storing member 220.

According to an embodiment, the plate 210 may define at least a portion of an outer surface of the case 200. The plate 210 may support the electronic device 100. The plate 210 may contact the electronic device 100. For example, a portion of a surface 210a of the plate 210 may face the electronic device 100. A portion of the surface 210a of the plate 210 may be in contact with the housing 110 of the electronic device 100. According to an embodiment, a size of the plate 210 may be larger than a size of the electronic device 100. The plate 210 may include a first portion 211, a second portion 212, and/or a third portion 213. According to an embodiment, the first portion 211 may support the electronic device 100. The first portion 211 may be in contact with the electronic device 100. The electronic device 100 may be disposed on the first portion 211. For example, the electronic device 100 may be disposed on an inner surface 211a (e.g., the first inner surface 211a) of the first portion 211. For example, the inner surface 211a of the first portion 211 may face the rear surface of the electronic device 100. The second portion 212 may be movable with respect to the first portion 211. For example, the second portion 212 may be rotatable with respect to the first portion 211. For example, the second portion 212 may be foldable with respect to the first portion 211. An inner surface 212a (e.g., the second inner surface 212a) of the second portion 212 may be spaced apart from the inner surface 211a (e.g., the first inner surface 211a) of the first portion 211. The third portion 213 may be disposed between the first portion 211 and the second portion 212. The third portion 213 may connect the first portion 211 and the second portion 212. For example, an end of the third portion 213 may be connected to the first portion 211, and another end of the third portion 213 may be connected to the second portion 212. An inner surface 213a (e.g., the third inner surface 213a) of the third portion 213 may be disposed between the inner surface 211a (e.g., the first inner surface 211a) of the first portion 211 and the inner surface 212a (e.g., the second inner surface 212a) of the second portion 212. The inner surface 213a of the third portion 213 may connect the inner surface 211a of the first portion 211 and the inner surface 212a of the second portion 212. The surface 210a of the plate 210 may include the inner surface 211a of the first portion 211, the inner surface 212a of the second portion 212, and the inner surface 213a of the third portion 213. The surface 210a of the plate 210 may be defined by the inner surface 211a of the first portion 211, the inner surface 212a of the second portion 212, and the inner surface 213a of the third portion 213.

According to an embodiment, as the first portion 211 and the second portion 212 are movable with respect to each other, a state of the case 200 may include a first state and a second state. In the first state of the case 200, a direction (e.g., a +z direction) in which the inner surface 211a of the first portion 211 faces may be substantially the same as a direction (e.g., the +z direction) in which the inner surface 212a of the second portion 212 faces. In the first state of the case 200, the display 120 may be visually exposed to the outside of the case 200. In the first state of the case 200, the display 120 may not be covered by the second portion 212. As the second portion 212 moves with respect to the first portion 211, the state of the case 200 may be changed from the first state to the second state. In the second state of the case 200, the inner surface 211a of the first portion 211 and the inner surface 212a of the second portion 212 may face each other. For example, in the second state of the case 200, the direction in which the inner surface 211a of the first portion 211 faces and the direction in which the inner surface 212a of the second portion 212 faces may be opposite to each other. In the second state of the case 200, the display 120 may be covered by the second portion 212. As the second portion 212 moves with respect to the first portion 211, the state of the case 200 may be changed from the second state to the first state.

According to an embodiment, the storing member 220 may accommodate at least a portion of the electronic pen 130. The storing member 220 may support the electronic pen 130. The electronic pen 130 may be disposed on the storing member 220. For example, the electronic pen 130 may be disposed on a surface 220a of the storing member 220. According to an embodiment, the storing member 220 may be disposed on the plate 210. For example, the storing member 220 may be disposed on the surface 210a of the plate 210. The storing member 220 may be disposed between the first portion 211 and the second portion 212. The storing member 220 may be disposed on the third portion 213. For example, the storing member 220 may be disposed on the inner surface 213a of the third portion 213. According to an embodiment, the storing member 220 may include a seating portion 221, a first protruding portion 222, a second protruding portion 223, a receiving space 224, a first actuating portion 225, a second actuating portion 226, and/or a supporting member 227.

According to an embodiment, the seating portion 221 may support the electronic pen 130. The electronic pen 130 may be seated on the seating portion 221. The seating portion 221 may be disposed between the first protruding portion 222 and the second protruding portion 223. The seating portion 221 may define a step between the first protruding portion 222 and the second protruding portion 223. For example, the seating portion 221 may have a thickness thinner than a thickness of each of the first protruding portion 222 and the second protruding portion 223. A thickness of a component may mean a distance in a direction (e.g., the +z direction or a -z direction) parallel to a direction (e.g., the +z direction) in which the surface 210a of the plate 210 faces in the first state of the case 200, and the corresponding expression may be utilized substantially the same below unless otherwise stated. According to an embodiment, a length of the seating portion 221 may correspond to a length of the electronic pen 130. For example, the length of the seating portion 221 may be substantially the same as the length of the electronic pen 130, but is not limited thereto. For example, the length of the seating portion 221 may be longer or shorter than the length of the electronic pen 130.

According to an embodiment, the first protruding portion 222 may receive the end 130a of the electronic pen 130. For example, the first protruding portion 222 may surround the end 130a of the electronic pen 130. For example, the first protruding portion 222 may envelop the end 130a of the electronic pen 130. The first protruding portion 222 may form the receiving space 224. The first protruding portion 222 may surround the receiving space 224. The first protruding portion 222 may envelop the receiving space 224. The first protruding portion 222 may have a thickness thicker than a thickness of the seating portion 221. The first protruding portion 222 may be connected to the seating portion 221. For example, the first protruding portion 222 may be connected to an end of the seating portion 221.

According to an embodiment, the second protruding portion 223 may be connected to the seating portion 221. The second protruding portion 223 may be connected to another end of the seating portion 221 opposite to the end of the seating portion 221 connected to the first protruding portion 222. According to an embodiment, the second protruding portion 223 may receive the first actuating portion 225. For example, the second protruding portion 223 may surround the first actuating portion 225. For example, the second protruding portion 223 may envelop the first actuating portion 225. The second protruding portion 223 may have a thickness thicker than the thickness of the seating portion 221. For example, the thickness of the second protruding portion 223 may be substantially the same as the thickness of the first protruding portion 222, but is not limited thereto. For example, the thickness of the second protruding portion 223 may be different from the thickness of the first protruding portion 222.

According to an embodiment, the receiving space 224 may receive a portion of the electronic pen 130. The receiving space 224 may receive the end 130a of the electronic pen 130. The electronic pen 130 may be inserted into the receiving space 224. In a state in which the end 130a of the electronic pen 130 is disposed in the receiving space 224, a portion of the electronic pen 130 may be surrounded (or enveloped) by the first protruding portion 222. For example, the receiving space 224 may be defined as an empty space disposed inside the first protruding portion 222.

According to an embodiment, the first actuating portion 225 may detachably couple the electronic pen 130 and the case 200. The first actuating portion 225 may insert a portion of the electronic pen 130 into the receiving space 224. The first actuating portion 225 may apply a force in a first direction (e.g., the +y direction) toward the receiving space 224 to the other end 130b of the electronic pen 130. The first actuating portion 225 may move the electronic pen 130 in the first direction (e.g., the +y direction). The first actuating portion 225 may reduce movement in a second direction (e.g., the -y direction) opposite to the first direction (e.g., the +y direction) of the electronic pen 130. For example, the first actuating portion 225 may apply the force in the first direction (e.g., the +y direction) from the end 130a of the electronic pen 130 toward the other end 130b of the electronic pen 130 to the other end 130b of the electronic pen 130. For example, the first actuating portion 225 may be described as a repelling portion (or an repelling structure) that applies a force to push the other end 130b of the electronic pen 130 in a direction (e.g., the +y direction) away from the first actuating portion 225. For example, the first actuating portion 225 may be referred to as a first coupling portion that applies a force in the direction (e.g., the +y direction) away from the first actuating portion 225 to the other end 130b of the electronic pen 130. According to an embodiment, the first actuating portion 225 may be disposed in the storing member 220. The first actuating portion 225 may be disposed in the second protruding portion 223. The first actuating portion 225 may be spaced apart from the surface 210a of the plate 210 in the second protruding portion 223. For example, the first actuating portion 225 may be spaced apart from the inner surface 213a of the third portion 213 in the second protruding portion 223.

According to an embodiment, the second actuating portion 226 may seat the electronic pen 130 on the storing member 220. The second actuating portion 226 may apply a force to the electronic pen 130 such that the electronic pen 130 maintains a state in which the electronic pen 130 is seated on the storing member 220. For example, the second actuating portion 226 may apply a force in a third direction (e.g., the -z direction) toward the surface 210a of the plate 210 to the electronic pen 130. For example, the second actuating portion 226 may apply the force in the third direction (e.g., the -z direction) approaching the surface 210a of the plate 210 to the electronic pen 130. For example, the second actuating portion 226 may apply the force in the third direction (e.g., the -z direction) opposite to a direction (e.g., the +z direction) in which the surface 210a of the plate 210 faces in the first state of the case 200 to the electronic pen 130. According to an embodiment, the second actuating portion 226 may be disposed in the storing member 220. The second actuating portion 226 may be surrounded by the seating portion 221 of the storing member 220. The second actuating portion 226 may be enveloped by the seating portion 221 of the storing member 220. The second actuating portion 226 may be attached on the surface 210a of the plate 210. For example, the second actuating portion 226 may be attached on the inner surface 213a of the third portion 213 in the seating portion 221. For example, the second actuating portion 226 may be received inside a groove formed by recessing the surface 210a of the plate 210 inwardly. For example, the second actuating portion 226 may be referred to as a second coupling portion that applies a force in a direction (e.g., the -z direction) toward the surface 210a of the plate to the electronic pen 130.

According to an embodiment, the supporting member 227 may space apart the first actuating portion 225 from the surface 210a of the plate 210. For example, the first actuating portion 225 may be spaced apart from the inner surface 213a of the third portion 213 by the supporting member 227. The supporting member 227 may be disposed between the surface 210a of the plate 210 and the first actuating portion 225. For example, the supporting member 227 may be in contact with the surface 210a of the plate 210 and the first actuating portion 225.

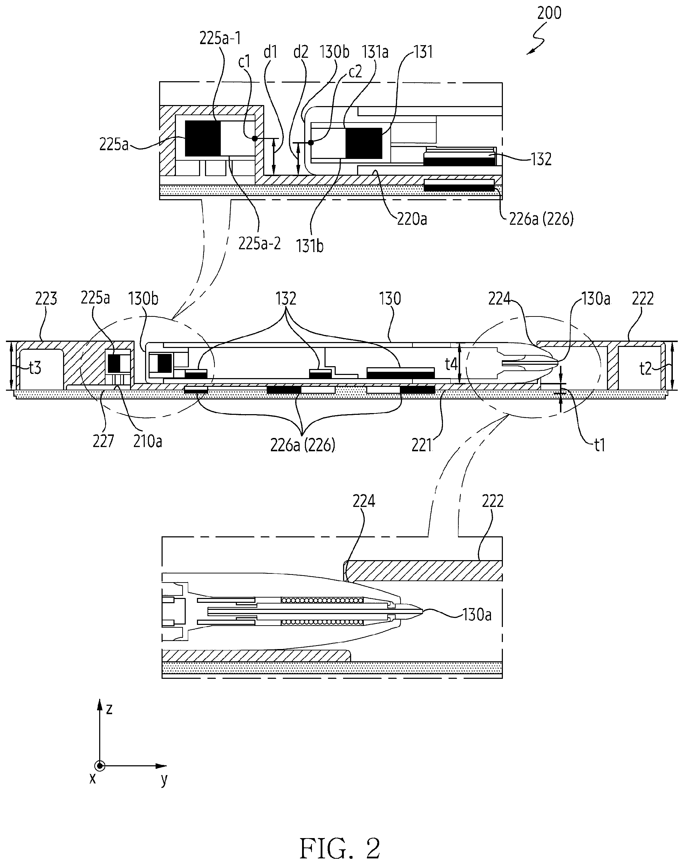

According to an embodiment, the electronic pen 130 may be easily coupled to the case 200 by the first actuating portion 225 and the second actuating portion 226. For example, a process in which the electronic pen 130 is coupled to the case 200 by the first actuating portion 225 and the second actuating portion 226 may be described with reference to FIG. 2.

FIG. 2 is a cross-sectional view illustrating an example of an exemplary case cut along line A-A' of FIG. 1B according to an embodiment.

Referring to FIG. 2, according to an embodiment, a first actuating portion 225 may include a first magnet 225a. The first magnet 225a may be disposed in a second protruding portion 223.

According to an embodiment, an electronic pen 130 may include a second magnet 131 corresponding to the first magnet 225a. The second magnet 131 may be disposed in the electronic pen 130. The second magnet 131 may be closer to another end 130b from among an end 130a and the other end 130b of the electronic pen 130. For example, the second magnet 131 may be disposed in the other end 130b of the electronic pen 130.

According to an embodiment, the first actuating portion 225 may insert the end 130a of the electronic pen 130 into a receiving space 224. The first magnet 225a of the first actuating portion 225 may insert the end 130a of the electronic pen 130 into the receiving space 224 by interacting with the second magnet 131. For example, the first magnet 225a may apply a force in a first direction (e.g., a +y direction) to the other end 130b of the electronic pen 130 by exerting a repulsive force to the second magnet 131. The electronic pen 130 may move along the first direction (e.g., the +y direction) by receiving the force in the first direction (e.g., the +y direction) from the first magnet 225a. As the electronic pen 130 moves in the first direction (e.g., the +y direction), the end 130a of the electronic pen 130 may be inserted into the receiving space 224. The first actuating portion 225 may provide convenience for a user to easily couple the electronic pen 130 to a case 200 by providing the force in the first direction to the electronic pen 130.

According to an embodiment, the first actuating portion 225 may maintain a state in which the electronic pen 130 is inserted into the receiving space 224. For example, in case that the electronic pen 130 moves in a second direction (e.g., a -y direction) opposite the first direction (e.g., the +y direction), the electronic pen 130 may be pulled out from the receiving space 224. When the electronic pen 130 is pulled out from the receiving space 224, the electronic pen 130 may be separated from the case 200 regardless of an intention of the user. When the electronic pen 130 is separated from the case 200 regardless of the intention of the user, the user may lose the electronic pen 130. The case 200 according to an embodiment may maintain a position of the electronic pen 130 in the case 200 by the first actuating portion 225 that applies the force in the first direction toward the receiving space 224 to the electronic pen 130. As the position of the electronic pen 130 in the case 200 is maintained, a possibility of the electronic pen 130 being lost may be reduced.

According to an embodiment, a first distance d1 between a surface 220a of a storing member 220 in contact with the electronic pen 130 and the first magnet 225a of the first actuating portion 225 may be different from a second distance d2 between the surface 220a of the storing member 220 and the second magnet 131 in the electronic pen 130. The surface 220a of the storing member 220 may face a fourth direction (e.g., a +z direction) opposite to a third direction (e.g., a -z direction) approaching a surface 210a of a plate 210. For example, the first distance d1 between the surface 220a of the storing member 220 and a first center c1 of the first magnet 225a may be different from the second distance d2 between the surface 220a of the storing member 220 and a second center c2 of the second magnet 131 in the electronic pen 130. For example, the first distance d1 between the surface 220a of the storing member 220 and the first center c1 of the first magnet 225a may be greater than or equal to the second distance d2 between the surface 220a of the storing member 220 and the second center c2 of the second magnet 131 in the electronic pen 130. The first center c1 may be positioned on a center point of a first side surface 225a-1 of the first magnet 225a facing the fourth direction (e.g., the +z direction) and a second side surface 225a-2 of the first magnet 225a opposite to the first side surface 225a-1. The second side surface 225a-2 of the first magnet 225a may face the third direction (e.g., the -z direction). The second center c2 may be positioned on a center point of a first side surface 131a of the second magnet 131 facing the fourth direction (e.g., the +z direction) and a second side surface 131b of the second magnet 131 opposite to the first side surface 131a. The second side surface 131b of the second magnet 131 may face the third direction (e.g., the -z direction). However, it is not limited thereto. For example, the first distance d1 may mean a distance between the surface 220a of the storing member 220 and the side surface 225a-1 of the first magnet 225a facing the fourth direction (e.g., the +z direction), and the second distance d2 may mean a distance between the surface 220a of the storing member 220 and the side surface 131a of the second magnet 131 in the electronic pen 130 facing the fourth direction (e.g., the +z direction). For example, the first distance d1 between the surface 220a of the storing member 220 and the side surface 225a-1 of the first magnet 225a facing the fourth direction (e.g., the +z direction) may be greater than or equal to the second distance d2 between the surface 220a of the storing member 220 and the side surface 131a of the second magnet 131 in the electronic pen 130 facing the fourth direction. For example, as the first magnet 225a is supported by a supporting member 227 disposed in the second protruding portion 223, the first distance d1 may be greater than or equal to the second distance d2. For example, in case that the second distance d2 is smaller than the first distance d1, the electronic pen 130 may receive a force in a direction inclined counterclockwise with respect to the first direction (e.g., the +y direction) by the first actuating portion 225 while being seated on the storing member 220. In case that the electronic pen 130 receives the force in the direction inclined counterclockwise with respect to the first direction (e.g., the +y direction), the end 130a of the electronic pen 130 may not move into the receiving space 224. Since the first distance d1 has a size greater than or equal to the second distance d2, the case 200 according to an embodiment may provide a structure in which the end 130a of the electronic pen 130 is easily inserted into the receiving space 224. For example, in case that the first distance d1 is greater than the second distance d2, the first actuating portion 225 may provide the electronic pen 130 with a force inclined clockwise with respect to the first direction (e.g., the +y direction) while the electronic pen 130 is seated on the storing member 220. As the electronic pen 130 is provided with the force inclined clockwise with respect to the first direction (e.g., +y direction), the end 130a of the electronic pen 130 may be easily inserted into the receiving space 224.

According to an embodiment, a second actuating portion 226 may include at least one third magnet 226a. The at least one third magnet 226a may be disposed in a seating portion 221. The at least one third magnet 226a may be disposed on the surface 210a of the plate 210. The at least one third magnet 226a may be disposed in the seating portion 221. The at least one third magnet 226a may be disposed between the first actuating portion 225 and the receiving space 224. The at least one third magnet 226a may be disposed between the end 130a of the electronic pen 130 and the other end 130b of the electronic pen 130 in a state in which the electronic pen 130 is seated on the storing member 220. The at least one third magnet 226a may include a plurality of third magnets spaced apart from each other.

According to an embodiment, the electronic pen 130 may include at least one fourth magnet 132 corresponding to the at least one third magnet 226a. The at least one fourth magnet 132 may be disposed in the electronic pen 130. For example, the at least one fourth magnet 132 may be disposed between the end 130a of the electronic pen 130 and the other end 130b of the electronic pen 130. According to an embodiment, the number of the at least one fourth magnet 132 may be substantially the same as the number of the at least one third magnet 226a. For example, the at least one fourth magnet 132 may include a plurality of fourth magnets spaced apart from each other. However, it is not limited thereto. For example, the number of the at least one fourth magnet 132 may be different from the number of the at least one third magnet 226a.

According to an embodiment, the second actuating portion 226 may detachably attach the electronic pen 130 on the surface 220a of the storing member 220. For example, the at least one third magnet 226a of the second actuating portion 226 may attach the electronic pen 130 on the surface 220a of the storing member 220 by interacting with the at least one fourth magnet 132 in the electronic pen 130. For example, the at least one third magnet 226a may apply a force in the third direction (e.g., the -z direction) to the electronic pen 130 by exerting an attractive force to the at least one fourth magnet 132 disposed in the electronic pen 130. As the force in the third direction (e.g., the -z direction) is applied to the electronic pen 130, the electronic pen 130 may maintain a state of being attached on the surface 220a of the storing member 220.

According to an embodiment, magnitude of a force applied between the first magnet 225a and the second magnet 131 may be greater than magnitude of a force applied between the at least one third magnet 226a and the at least one fourth magnet 132. As the magnitude of the force applied between the first magnet 225a and the second magnet 131 is relatively greater, when the electronic pen 130 is inserted into the receiving space 224, the electronic pen 130 may move along the first direction (e.g., the +y direction) while the at least one third magnet 226a and the at least one fourth magnet 132 interact.

According to an embodiment, the seating portion 221, which is a portion of the storing member 220, may have a shape that is open toward the outside of the storing member 220. For example, the seating portion 221 may be opened toward the outside of the storing member 220 by having a thickness thinner than a first protruding portion 222 and the second protruding portion 223. The seating portion 221 may have a first thickness t1. The first protruding portion 222 may have a second thickness t2 greater than the first thickness t1. The second protruding portion 223 may have a third thickness t3 greater than the first thickness t1. As the seating portion 221 has the open shape, at least a portion of the electronic pen 130 may be exposed to the outside of the storing member 220 in a state of being seated in the storing member 220. For example, at least a portion of the electronic pen 130 may not be covered by the storing member 220 in the state of being seated in the storing member 220. According to an embodiment, the second thickness t2 and the third thickness t3 may be substantially the same. For example, the second thickness t2 may be substantially the same as a sum of the first thickness t1 and a fourth thickness t4, which is a thickness of the electronic pen 130. For example, the third thickness t3 may be substantially the same as the sum of the first thickness t1 and the fourth thickness t4, which is the thickness of the electronic pen 130. However, it is not limited thereto. For example, the second thickness t2 and the third thickness t3 may be different from each other.

As described above, the case 200 according to an embodiment may provide a structure in which the electronic pen 130 may be easily inserted into the receiving space 224 by the first actuating portion 225 that transmits the force in the first direction (e.g., the +y direction) to the other end 130b of the electronic pen 130.

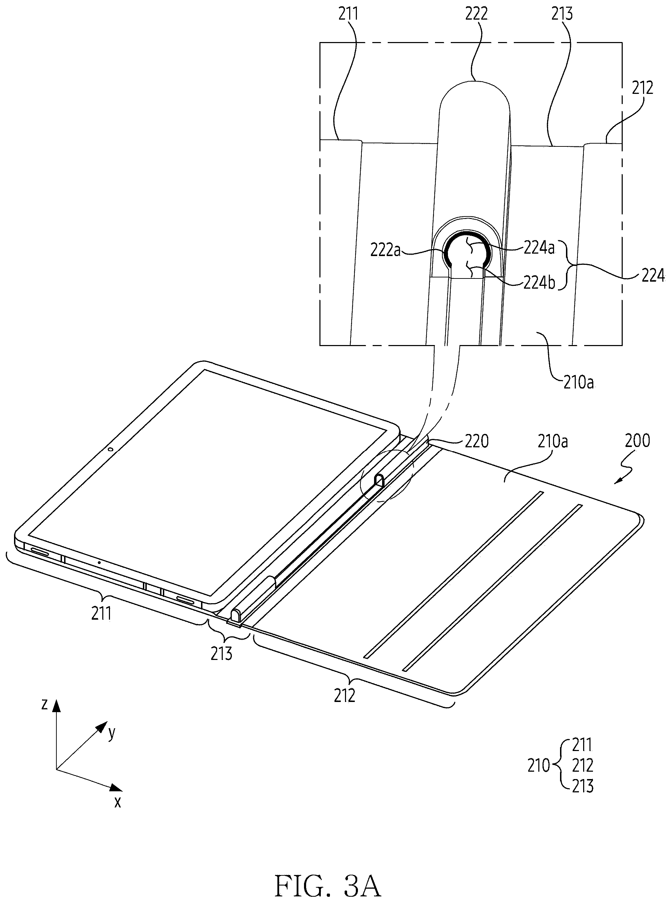

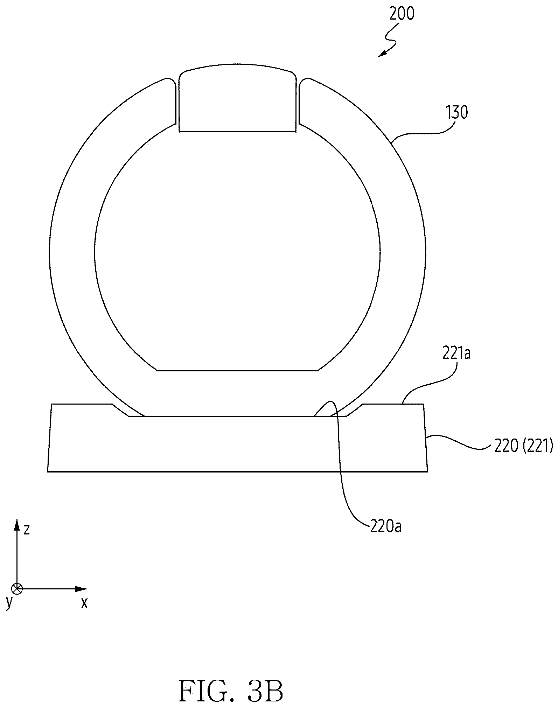

FIG. 3A is a perspective view of an exemplary case according to an embodiment, and FIG. 3B is a cross-sectional view illustrating an example of an exemplary case cut along line B-B' of FIG. 1B according to an embodiment.

Referring to FIGS. 3A and 3B, in a first state of a case 200, a first portion 211 may form a step with respect to a third portion 213. In the first state of the case 200, a step may be formed at a boundary between the first portion 211 and the third portion 213. In the first state of the case 200, a second portion 212 may form a step with respect to the third portion 213. In the first state of the case 200, a step may be formed at a boundary between the second portion 212 and the third portion 213.

According to an embodiment, a cross-sectional area of a receiving space 224 may be smaller than a cross-sectional area of an electronic pen 130. For example, a width of the receiving space 224 may be smaller than a width of the electronic pen 130. A width of a component may mean a distance in a direction (e.g., a +x direction or a -x direction) perpendicular to a first direction (e.g., a +y direction) and a third direction (e.g., a -z direction), and the corresponding expression may be utilized substantially the same below unless otherwise stated. As the cross-sectional area of the receiving space 224 is smaller than the cross-sectional area of the electronic pen 130, a movement range of the electronic pen 130 inserted into the receiving space 224 by a first actuating portion (e.g., the first actuating portion 225 of FIG. 1C) may be reduced (or limited). As the movement range of the electronic pen 130 inserted into the receiving space 224 is reduced (or limited), at least a portion of the electronic pen 130 may be exposed to the outside of a storing member 220 such that a user may easily grip the electronic pen 130.

According to an embodiment, the receiving space 224 may include a first region 224a and a second region 224b. The first region 224a may receive a portion of the electronic pen 130. The portion of the electronic pen 130 may be inserted into the first region 224a. The first region 224a may have a shape corresponding to a shape of the electronic pen 130. For example, in case that a cross section of the electronic pen 130 has a substantially circular shape, a cross section of the first region 224a may have a substantially circular shape. The second region 224b may be connected to the first region 224a. A size of the second region 224b may be smaller than a size of the first region 224a. For example, a width of the second region 224b may be smaller than a width of the first region 224a. As the size of the second region 224b is smaller than the size of the first region 224a, movement of the electronic pen 130 in the third direction (e.g., the -z direction) and/or a fourth direction (e.g., a +z direction) may be limited.

According to an embodiment, a surface 210a of a plate 210 may be closer to the second region 224b from among the first region 224a and the second region 224b. For example, a distance from the surface 210a of the plate 210 to the first region 224a may be greater than a distance from the surface 210a of the plate 210 to the second region 224b.

Referring to FIG. 3B, according to an embodiment, a seating portion 221 may include a protrusion 221a. The protrusion 221a may reduce a movement range of the electronic pen 130 with respect to the storing member 220. For example, the protrusion 221a may reduce movement of the electronic pen 130 to the outside of the storing member 220. The protrusion 221a may protrude from a surface 220a of the storing member 220 on which the electronic pen 130 is disposed. For example, the protrusion 221a may extend along the fourth direction (e.g., the +z direction) from the surface 220a of the storing member 220. At least a portion of the protrusion 221a may be in contact with at least a portion of the electronic pen 130 disposed on the surface 220a of the storing member 220. For example, at least a portion of the protrusion 221a may be in contact with a periphery of at least a portion of the electronic pen 130.

Referring back to FIG. 3A, according to an embodiment, a first protruding portion 222 may include a friction member 222a. The friction member 222a may limit the movement of the electronic pen 130 to the outside of the receiving space 224. The friction member 222a may be in contact with a portion of the electronic pen 130 inserted into the receiving space 224. For example, the friction member 222a may be in contact with an outer surface of the portion of the electronic pen 130 inserted into the receiving space 224. As the electronic pen 130 is provided with a friction force due to contact with the friction member 222a, movement of the electronic pen 130 may be limited. For example, the friction member 222a may be manufactured from a material (e.g., thermoplastic polyurethane (TPU), and/or silicone) for providing a friction force to the electronic pen 130. The friction member 222a may be disposed inside the receiving space 224. For example, the friction member 222a may be disposed along an inner surface of the receiving space 224. For example, the friction member 222a may be disposed on an inner surface of the first protruding portion 222 along a periphery of the receiving space 224.

As described above, since the size of the second region 224b is smaller than the size of the first region 224a of the receiving space 224, the case 200 according to an embodiment may provide a structure in which a position of the electronic pen 130 inserted into the receiving space 224 may be maintained. The case 200 according to an embodiment may provide a structure in which a position of the electronic pen 130 seated on the storing member 220 may be maintained by the protrusion 221a and the friction member 222a that reduce the movement range of the electronic pen 130.

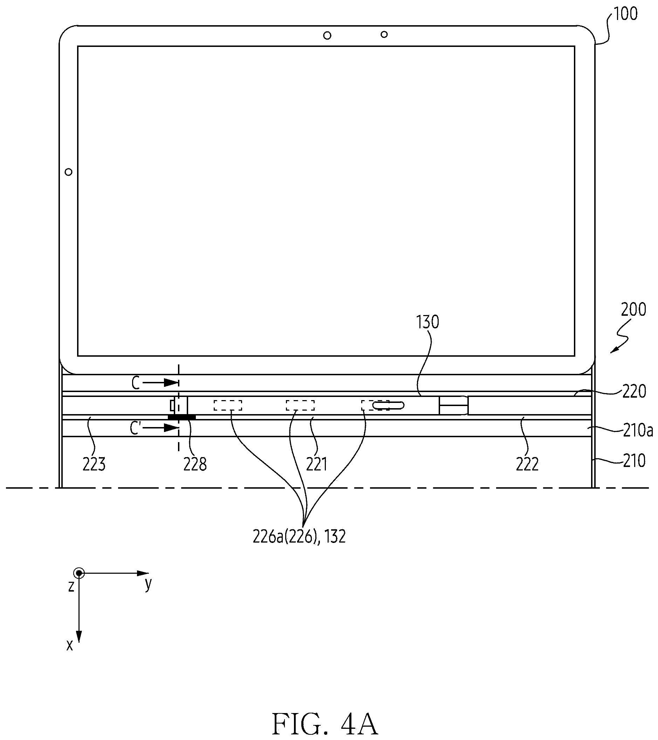

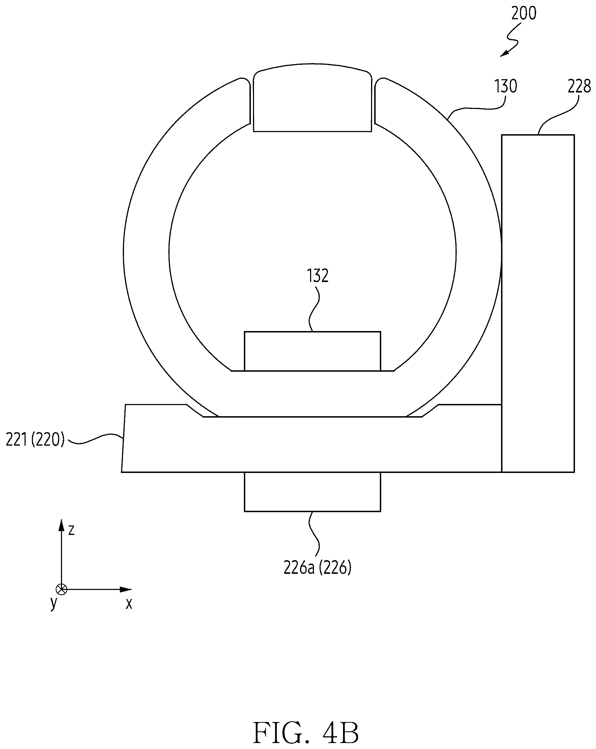

FIG. 4A is a top plan view of an exemplary case according to an embodiment, and FIG. 4B is a cross-sectional view illustrating an example of an exemplary case cut along line C-C' of FIG. 4A according to an embodiment.

Referring to FIGS. 4A and 4B, according to an embodiment, a storing member 220 may include a barrier 228. The barrier 228 may limit movement of an electronic pen 130 with respect to the storing member 220. The barrier 228 may reduce a movement range of the electronic pen 130 with respect to the storing member 220. According to an embodiment, the barrier 228 may be disposed on a surface 210a of a plate 210. The barrier 228 may be connected to a seating portion 221. The barrier 228 may be connected to at least one of a first protruding portion 222 and a second protruding portion 223. For example, the barrier 228 may be connected to the first protruding portion 222. For example, the barrier 228 may be connected to the second protruding portion 223. For example, the barrier 228 may be connected to the first protruding portion 222 and the second protruding portion 223. A length of the barrier 228 may be less than or equal to a length of the electronic pen 130. For example, the length of the barrier 228 may be shorter than a length of the seating portion 221. For example, the length of the barrier 228 may be substantially the same as the length of the seating portion 221.

According to an embodiment, the barrier 228 may shield a magnetic field from a third magnet 226a of a second actuating portion 226 and/or a fourth magnet 132 in the electronic pen 130. For example, the barrier 228 may include a conductive material (e.g., a metallic material). As the barrier 228 shields the magnetic field from at least one of the third magnet 226a and the fourth magnet 132, malfunction of an electronic device 100 disposed on a case 200 may be reduced.

According to an embodiment, a thickness of the barrier 228 may be thicker than a thickness of the seating portion 221. For example, the thickness of the barrier 228 may be substantially the same as a sum of the thickness of the seating portion 221 and a thickness of the electronic pen 130. For example, the thickness of the barrier 228 may be smaller than the sum of the thickness of the seating portion 221 and the thickness of the electronic pen 130. As the barrier 228 is disposed, movement of the electronic pen 130 to the outside of the storing member 220 may be reduced (or limited).

Meanwhile, in FIGS. 4A and 4B, the barrier 228 is illustrated as being connected to a side surface of the seating portion 221 facing a +x-axis direction, but is not limited thereto. For example, the barrier 228 may be connected to another side surface of the seating portion 221 facing a -x-axis direction. For example, the barrier 228 may be connected to the side surface of the seating portion 221 facing the +x-axis direction and the other side surface of the seating portion 221 facing the -x-axis direction.

As described above, the case 200 according to an embodiment may provide a structure in which a position of the electronic pen 130 may be maintained by the barrier 228 that limits the movement range of the electronic pen 130 with respect to the storing member 220.

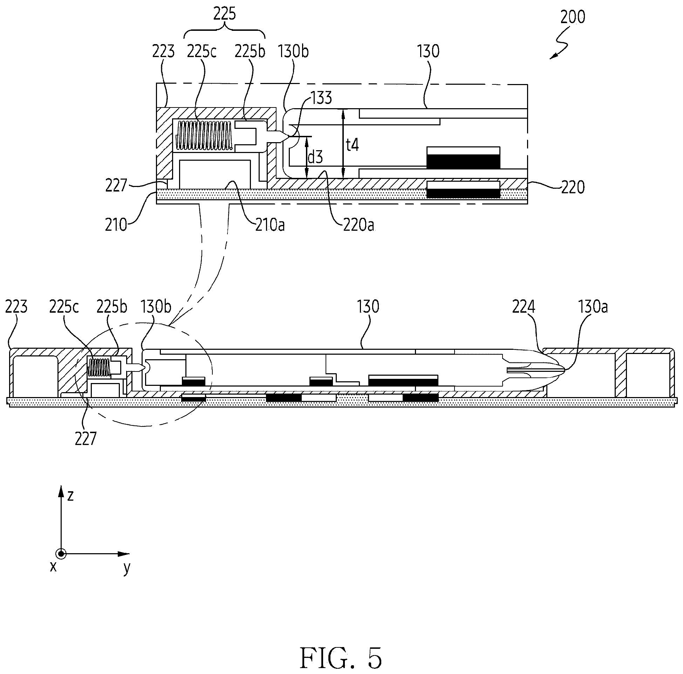

FIG. 5 is a cross-sectional view illustrating an example of an exemplary case according to an embodiment.

Referring to FIG. 5, according to an embodiment, a first actuating portion 225 may include a pressing member 225b (or a pressing portion 225b) and an elastic member 225c. The first pressing portion 225b may be movable along a first direction (e.g., a +y direction) or a second direction (e.g., a -y direction) opposite to the first direction with respect to a storing member 220. For example, the first pressing portion 225b may move along the first direction (e.g., the +y direction) such that an end 130a of an electronic pen 130 is inserted into a receiving space 224. According to an embodiment, at least a portion of the first pressing portion 225b may be disposed in the storing member 220. The first pressing portion 225b may protrude from the inside of the storing member 220 to the outside of the storing member 220 by moving in the first direction (e.g., the +y direction). The first pressing portion 225b may be in contact with another end 130b of the electronic pen 130 by protruding to the outside of the storing member 220. The first pressing portion 225b may apply a force in the first direction (e.g., the +y direction) to the electronic pen 130 by being in contact with the other end 130b of the electronic pen 130.

According to an embodiment, the elastic member 225c may provide a force to the pressing member 225b. The elastic member 225c may depress the pressing member 225b. For example, the elastic member 225c may provide a force in the first direction (e.g., the +y direction) to the pressing member 225b by being in contact with the pressing member 225b. For example, the elastic member 225c may provide an elastic force to the pressing member 225b by elastically deforming. For example, the elastic member 225c may be a spring, but is not limited thereto. For example, the elastic member 225c may be replaced with various members that follow Hooke's Law. According to an embodiment, the elastic member 225c may be disposed in the storing member 220. The elastic member 225c may be disposed in a second protruding portion 223 of the storing member 220.

According to an embodiment, a supporting member 227 may support the pressing member 225b of the first actuating portion 225. For example, the supporting member 227 may be disposed between the pressing member 225b and a surface 210a of a plate 210. The supporting member 227 may support the elastic member 225c of the first actuating portion 225. For example, the supporting member 227 may be disposed between the elastic member 225c and the surface 210a of the plate 210.

According to an embodiment, the electronic pen 130 may include a receiving groove 133. The receiving groove 133 may be disposed in the other end 130b of the electronic pen 130. For example, as a portion of the other end 130b of the electronic pen 130 is recessed inwardly into the electronic pen 130, the receiving groove 133 may be formed. The receiving groove 133 may receive a portion of the pressing member 225b. For example, the receiving groove 133 may have a shape corresponding to a portion of the pressing member 225b. For example, while the pressing member 225b protrudes outside the second protruding portion 223, the electronic pen 130 may approach the storing member 220. As the electronic pen 130 approaches the storing member 220, the other end 130b of the electronic pen 130 may contact the pressing member 225b. The pressing member 225b may move inside the storing member 220 along the second direction (e.g., the -y direction) by contact with the other end 130b of the electronic pen 130. As the pressing member 225b moves in the second direction (e.g., the -y direction), the elastic member 225c may be compressed. While the pressing member 225b is inserted into the receiving groove 133 of the electronic pen 130, the compressed elastic member 225c may depress the pressing member 225b in the first direction (e.g., the +y direction). The pressing member 225b may move the electronic pen 130 in the first direction (e.g., the +y direction) based on receiving a force from the elastic member 225c. The electronic pen 130 may be inserted into the receiving space 224 by moving along the first direction (e.g., the +y direction) by the first pressing portion 225b. According to an embodiment, the pressing member 225b may apply a force in the first direction (e.g., the +y direction) to the other end 130b of the electronic pen 130 while the electronic pen 130 is inserted into the receiving space 224. As the pressing member 225b provides the force in the first direction (e.g., the +y direction) to the electronic pen 130, a position of the electronic pen 130 may maintain a state of being inserted into the receiving space 224.

According to an embodiment, a third distance d3 between a surface 220a of the storing member 220 on which the electronic pen 130 is disposed and the pressing member 225b may be different from half of a fourth thickness t4, which is a thickness of the electronic pen 130. For example, the third distance d3 may be greater than or equal to half of the fourth thickness t4. In case that the third distance d3 is less than half of the fourth thickness t4, the electronic pen 130 may receive a force inclined counterclockwise with respect to the first direction (e.g., the +y direction) while being seated on the storing member 220. In case that the electronic pen 130 receives the force inclined counterclockwise with respect to the first direction (e.g., the +y direction), the end 130a of the electronic pen 130 may not move into the receiving space 224. Since the third distance d3 is greater than or equal to half of the fourth thickness t4, a case 200 according to an embodiment may provide a structure in which the end 130a of the electronic pen 130 is easily inserted into the receiving space 224.

As described above, the case 200 according to an embodiment may provide a structure in which the electronic pen 130 is easily seated on the storing member 220 by the first actuating portion 225 including the pressing member 225b and the elastic member 225c.

A case may include a structure for receiving an electronic pen for transmitting a user input to an electronic device. When the user uses the electronic pen, the electronic pen may be separated from the case. The user may detachably couple the electronic pen to the case after using the electronic pen. When the user couples the electronic pen to the case, a structure for easily receiving the electronic pen in the case may be required. When the user carries the case in a state of receiving the electronic pen in the case, a structure in which the electronic pen is not easily separated from the case may be required.

According to an embodiment, a case (e.g., the case 200 of FIGS. 1A, 1B, and 1C) detachably coupled to an electronic device (e.g., the electronic device 100 of FIGS. 1A and 1B) is provided. According to an embodiment, the case may comprise a plate (e.g., the plate 210 of FIGS. 1A, 1B, and 1C) supporting the electronic device. According to an embodiment, the case may comprise a storing member (e.g., the storing member 220 of FIGS. 1A, 1B, and 1C) for storing at least a portion of an electronic pen (e.g., the electronic pen 130 of FIGS. 1A, 1B, and 1C) disposed on a surface (e.g., the surface 210a of FIGS. 1A, 1B, and 1C) of the plate. According to an embodiment, the storing member may include a receiving space (e.g., the receiving space 224 of FIGS. 1A and 1C) receiving an end (e.g., the end 130a of FIGS. 1A and 1C) of the electronic pen. According to an embodiment, the storing member may include a first actuating portion (e.g., the first actuating portion 225 of FIG. 1C) applying a force in a direction toward the receiving space to another end (e.g., the other end 130b of FIGS. 1A and 1C) of the electronic pen opposite to the end of the electronic pen such that the end of the electronic pen is inserted into the receiving space. According to an embodiment, the storing member may include a second actuating portion (e.g., the second actuating portion 226 of FIG. 1C), disposed between the receiving space and the first actuating portion, and applying a force in a direction toward the surface of the plate to the electronic pen such that the electronic pen is seated onto the storing member. According to an embodiment, a portion of the storing member may open toward an outside of the storing member such that at least a portion of the electronic pen is exposed outside the storing member.

The case according to an embodiment may provide a structure in which the electronic pen may be easily inserted into the receiving space by the first actuating portion that transmits a force in a direction toward the receiving space to the other end of the electronic pen. The electronic pen according to an embodiment may provide a structure in which the electronic pen is easily coupled to the case by the second actuating portion that provides a force for seating the electronic pen on the storing member. Since the storing member is open toward the outside, the electronic device according to an embodiment may provide a structure in which a user may easily separate the electronic pen coupled to the case.

According to an embodiment, the first actuating portion may include a first magnet (e.g., the first magnet 225a of FIG. 2). According to an embodiment, the first magnet may exert a repulsive force to a second magnet (e.g., the second magnet 131 of FIG. 2) disposed inside the another end of the electronic pen, thereby inserting the end of the electronic pen into the receiving space.

The case according to an embodiment may provide a structure in which the electronic pen may be easily inserted into the receiving space by the first magnet that transmits a force in a direction toward the receiving space to the other end of the electronic pen.

According to an embodiment, a distance (e.g., the first distance d1 of FIG. 2) between a surface of the storing member on which the electronic pen is disposed and a center (e.g., the first center c1 of FIG. 2) of the first magnet may be greater than or equal to a distance (e.g., the second distance d2 of FIG. 2) between the surface of the storing member and a center (e.g., the second center c2 of FIG. 2) of the second magnet.

According to an embodiment, a distance (e.g., the first distance d1 of FIG. 2) between a side surface (e.g., the side surface 225a-1 of FIG. 2) of the first magnet facing a direction in which a surface (e.g., the surface 220a of FIG. 2) of the storing member on which the electronic pen is disposed faces and the surface of the storing member may be greater than or equal to a distance (e.g., the second distance d2 of FIG. 2) between a side surface (e.g., the side surface 131a of FIG. 2) of the second magnet facing a direction in which the surface of the storing member faces and the surface of the storing member.

Since the first distance between the storing member and the first magnet is greater than or equal to a distance between the storing member and the second magnet, the case according to an embodiment may provide a structure in which the electronic pen may be easily inserted into the receiving space.

According to an embodiment, the storing member may include a supporting member (e.g., the supporting member 227 of FIG. 2) supporting the first magnet by being disposed between the first magnet and the surface of the plate.

Since the first distance between the storing member and the first magnet is greater than or equal to the distance between the storing member and the second magnet, by the supporting member supporting the first magnet, the case according to an embodiment may provide the structure in which the electronic pen may be easily inserted into the receiving space.

According to an embodiment, the first actuating portion may include a pressing member (e.g., the pressing member 225b of FIG. 5) that moves in a first direction such that the another end of the electronic pen is inserted into the receiving space or in a second direction opposite to the first direction. According to an embodiment, the first actuating portion may include an elastic member (e.g., the pressing member 225b of FIG. 5), disposed in the storing member, depressing the pressing member.

The case according to an embodiment may provide a structure in which the electronic pen may be easily inserted into the receiving space by the pressing member that transmits a force in a direction toward the receiving space to the other end of the electronic pen.

According to an embodiment, a distance (e.g., the third distance d3 of FIG. 5) between a surface of the storing member on which the electronic pen is disposed and the pressing member may be greater than or equal to half a thickness (e.g., the fourth thickness t4 of FIG. 5) of the electronic pen.

Since the third distance between the storing member and the pressing member is greater than or equal to half of the thickness of the electronic pen, the case according to an embodiment may provide the structure in which the electronic pen may be easily inserted into the receiving space.

According to an embodiment, the storing member may include a supporting member (e.g., the supporting member 227 of FIG. 5) disposed between the surface of the plate and the pressing member.

Since the third distance between the storing member and the pressing member is greater than or equal to half of the thickness of the electronic pen, by the supporting member supporting the first magnet, the case according to an embodiment may provide the structure in which the electronic pen may be easily inserted into the receiving space.

According to an embodiment, the storing member may include a seating portion (e.g., the seating portion 221 of FIG. 1C) on which the electronic pen is seated. According to an embodiment, the storing member may include a first protruding portion (e.g., the first protruding portion 222 of FIG. 1C), connected to an end of the seating portion, surrounding the receiving space, and having a greater thickness than the seating portion. According to an embodiment, the storing member may include a second protruding portion (e.g., the second protruding portion 223 of FIG. 1C), connected to another end of the seating portion opposite to the end of the seating portion, surrounding the first actuating portion, and having a thickness greater than a thickness of the seating portion.

The case according to an embodiment may provide a structure in which a portion of the storing member is opened toward the outside by the first protruding portion and the second protruding portion defining a step with respect to the seating portion.

According to an embodiment, the seating portion may include a protrusion (e.g., the protrusion 221a of FIG. 3B), protruding from a surface of the storing member on which the electronic pen is disposed, and surrounding the electronic pen.

The case according to an embodiment may provide a structure capable of reducing a movement range of the electronic pen with respect to the storing member by the protrusion formed on the seating portion.

According to an embodiment, the storing member may include a barrier (e.g., the barrier 228 of FIGS. 4A and 4B), having a thickness greater than the thickness of the seating portion, and connected to the second protruding portion.

The case according to an embodiment may provide the structure capable of reducing the movement range of the electronic pen with respect to the storing member by the barrier connected to the first protruding portion.

According to an embodiment, the receiving space may include a first region (e.g., the first region 224a of FIG. 3A) having a shape corresponding to a shape of the electronic pen. According to an embodiment, the receiving space may include a second region (e.g., the second region 224b of FIG. 3A), having a width smaller than a width of the first region, connected to the first region. According to an embodiment, the surface of the plate may be closer to the second region from among the first region and the second region.

Since the second region close to the plate is smaller than the first region far from the plate, the case according to an embodiment may provide the structure capable of reducing the movement range of the electronic pen.

According to an embodiment, the plate may include a first portion (e.g., the first portion 211 of FIG. 1C) on which the electronic device is disposed. According to an embodiment, the plate may include a second portion (e.g., the second portion 212 of FIG. 1C) being foldable with respect to the first portion. According to an embodiment, the plate may include a third portion (e.g., the third portion 213 of FIG. 1C) disposed between the first portion and the second portion. According to an embodiment, the storing member may be disposed on the third portion.

The case according to an embodiment may provide a structure capable of covering the electronic device by the second portion movable with respect to the first portion.

According to an embodiment, a state of the case may include a first state in which a direction in which an inner surface (e.g., the inner surface 211a of FIG. 1C) of the first portion facing the electronic device faces and a direction in which an inner surface (e.g., the inner surface 212a of FIG. 1C) of the second portion faces are the same, and a second state in which the inner surface of the first portion and the inner surface of the second portion face each other. According to an embodiment, in the first state, a step may be formed at a boundary between the first portion and the third portion.

The case according to an embodiment may provide the structure capable of covering the electronic device by the second portion movable with respect to the first portion.

According to an embodiment, the second actuating portion may include at least one third magnet (e.g., the at least one third magnet 226a of FIG. 3) disposed between the first actuating portion and the receiving space. According to an embodiment, the at least one third magnet may exert an attractive force to at least one fourth magnet (e.g., the at least one fourth magnet 132 of FIG. 3) that corresponds to the at least one third magnet and is disposed in the electronic pen.

The case according to an embodiment may provide a structure capable of maintaining a position of the electronic pen on the storing member by the at least one third magnet disposed between the end of the electronic pen and the other end of the electronic pen.

According to an embodiment, the case may comprise a friction member (e.g., the friction member 222a of FIG. 3A), disposed along an inner surface of the receiving space, in contact with a portion of the electronic pen inserted into the receiving space.

The case according to an embodiment may provide the structure capable of reducing the movement range of the electronic pen with respect to the receiving space by the friction member disposed in the receiving space.

According to an embodiment, a case (e.g., the case 200 of FIGS. 1A, 1B, and 1C) detachably coupled to an electronic device (e.g., the electronic device 100 of FIGS. 1A and 1B) is provided. According to an embodiment, the case may comprise a plate (e.g., the plate 210 of FIGS. 1A, 1B, and 1C) supporting the electronic device. According to an embodiment, the case may comprise a storing member (e.g., the storing member 220 of FIGS. 1A, 1B, and 1C) for storing at least a portion of an electronic pen (e.g., the electronic pen 130 of FIGS. 1A, 1B, and 1C) disposed on a surface (e.g., the surface 210a of FIGS. 1A, 1B, and 1C) of the plate. According to an embodiment, the storing member may include a seating portion (e.g., the seating portion 221 of FIG. 1C), having a first thickness (e.g., the first thickness t1 of FIG. 2), on which the electronic pen is seated. According to an embodiment, the storing member may include a receiving space (e.g., the receiving space 224 of FIG. 1C) receiving an end (e.g., the end 130a of FIGS. 1A and 1C) of the electronic pen. According to an embodiment, the storing member may include a first protruding portion (e.g., the first protruding portion 222 of FIG. 1C), having a second thickness (e.g., the second thickness t2 of FIG. 2) greater than the first thickness, surrounding the receiving space, and connected to an end of the seating portion. According to an embodiment, the storing member may include a first actuating portion (e.g., the first actuating portion 225 of FIG. 1C) applying a force in a direction toward the receiving space to another end of the electronic pen opposite to the end of the electronic pen such that the end of the electronic pen is inserted into the receiving space. According to an embodiment, the storing member may include a second protruding portion (e.g., the second protruding portion 223 of FIG. 1C), having a third thickness (e.g., the third thickness t3 of FIG. 2) greater than the first thickness, surrounding the first actuating portion, and connected to another end (e.g., the other end 130b of FIGS. 1A and 1C) of the seating portion opposite to the end of the seating portion. According to an embodiment, the storing member may include a second actuating portion (e.g., the second actuating portion 226 of FIG. 1C), disposed in the seating portion, applying a force in a direction toward the surface of the plate to the electronic pen such that the electronic pen is seated onto the storing member.

The case according to an embodiment may provide a structure in which the electronic pen may be easily inserted into the receiving space by the first actuating portion that transmits a force in a direction toward the receiving space to the other end of the electronic pen. The electronic pen according to an embodiment may provide a structure in which the electronic pen is easily coupled to the case by the second actuating portion that provides a force for seating the electronic pen on the storing member. Since the storing member is open toward the outside, the electronic device according to an embodiment may provide a structure in which a user may easily separate the electronic pen coupled to the case.

According to an embodiment, the first actuating portion may include a first magnet (e.g., the first magnet 225a of FIG. 2). According to an embodiment, the first magnet may exert a repulsive force to a second magnet (e.g., the second magnet 131 of FIG. 2) disposed inside the another end of the electronic pen, thereby inserting the end of the electronic pen into the receiving space.

The case according to an embodiment may provide a structure in which the electronic pen may be easily inserted into the receiving space by the first magnet that transmits a force in a direction toward the receiving space to the other end of the electronic pen.

According to an embodiment, the first actuating portion may include a pressing member (e.g., the pressing member 225b of FIG. 5) that moves in a first direction such that the another end of the electronic pen is inserted into the receiving space or in a second direction opposite to the first direction. According to an embodiment, the first actuating portion may include an elastic member (e.g., the pressing member 225b of FIG. 5), disposed in the storing member, and depressing the pressing member.

The case according to an embodiment may provide a structure in which the electronic pen may be easily inserted into the receiving space by the pressing member that transmits a force in a direction toward the receiving space to the other end of the electronic pen.

According to an embodiment, the seating portion may include a protrusion (e.g., the protrusion 221a of FIG. 3B), protruding from a surface of the storing member on which the electronic pen is disposed, and surrounding the electronic pen.

The case according to an embodiment may provide a structure capable of reducing a movement range of the electronic pen with respect to the storing member by the protrusion formed on the seating portion.

According to an embodiment, the receiving space may include a first region (e.g., the first region 224a of FIG. 3A) having a shape corresponding to a shape of the electronic pen. According to an embodiment, the receiving space may include a second region (e.g., the second region 224b of FIG. 3A), having a width smaller than a width of the first region, connected to the first region. According to an embodiment, the surface of the plate may be closer to the second region from among the first region and the second region.

Since the second region close to the plate is smaller than the first region far from the plate, the case according to an embodiment may provide the structure capable of reducing the movement range of the electronic pen.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. **In** such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A case (200) detachably coupled to an electronic device (100), the case (200) comprising:
a plate (210) supporting the electronic device (100); and
a storing member (220) for storing at least a portion of an electronic pen (130) disposed on a surface (210a) of the plate (210),
wherein the storing member (220) includes:
a receiving space (224) receiving an end (130a) of the electronic pen (130);
a first actuating portion (225) applying a force in a direction toward the receiving space (224) to another end (130b) of the electronic pen (130) opposite to the end (130a) of the electronic pen (130) such that the end (130a) of the electronic pen (130) is inserted into the receiving space (224); and
a second actuating portion (226), disposed between the receiving space (224) and the first actuating portion (225), and applying a force in a direction toward the surface (210a) of the plate (210) to the electronic pen (130) such that the electronic pen (130) is seated onto the storing member (220), and
wherein a portion of the storing member (220) is open toward an outside of the storing member (220) such that at least a portion of the electronic pen (130) is exposed outside the storing member (220).

2. The case (200) of claim 1,
wherein the first actuating portion (225) includes a first magnet (225a), and
wherein the first magnet (225a) exerts a repulsive force to a second magnet (131) disposed inside the another end (130b) of the electronic pen (130), thereby inserting the end (130a) of the electronic pen (130) into the receiving space (224).

3. The case (200) of claim 2,
wherein a distance between a surface (220a) of the storing member (220) on which the electronic pen (130) is disposed and a center (cl) of the first magnet (225a) is greater than or equal to a distance between the surface (220a) of the storing member (220) and a center (c2) of the second magnet (131).

4. The case (200) of claim 2,
wherein the storing member (220) further includes a supporting member (227) supporting the first magnet (225a) by being disposed between the first magnet (225a) and the surface (210a) of the plate (210).

5. The case (200) of any one of claims 1 to 4,
wherein the first actuating portion (225) includes:
a pressing member (225b) that moves in a first direction such that the another end (130b) of the electronic pen (130) is inserted into the receiving space (224) or in a second direction opposite to the first direction; and
an elastic member (225c), disposed in the storing member (220), depressing the pressing member (225b).

6. The case (200) of claim 5,
wherein a distance between a surface (220a) of the storing member (220) on which the electronic pen (130) is disposed and the pressing member (225b) is greater than or equal to half a thickness of the electronic pen (130).

7. The case (200) of claim 5,
wherein the storing member (220) further includes a supporting member (227) disposed between the surface (210a) of the plate (210) and the pressing member (225b).

8. The case (200) of any one of claims 1 to 7,
wherein the storing member (220) includes:
a seating portion (221) on which the electronic pen (130) is seated;
a first protruding portion (222), connected to an end of the seating portion (221), surrounding the receiving space (224), and having a greater thickness than the seating portion (221); and
a second protruding portion (223), connected to another end of the seating portion (221) opposite to the end of seating portion (221), surrounding the first actuating portion (225), and having a thickness greater than a thickness of the seating portion (221).

9. The case (200) of claim 8,
wherein the seating portion (221) includes a protrusion (221a), protruding from a surface (220a) of the storing member (220) on which the electronic pen (130) is disposed, and surrounding the electronic pen (130).

10. The case (200) of claim 8,
wherein the storing member (220) includes a barrier (228), having a thickness greater than the thickness of the seating portion (221), and connected to the second protruding portion (223).

11. The case (200) of any one of claims 1 to 10,
wherein the receiving space (224) includes:
a first region (224a) having a shape corresponding to a shape of the electronic pen (130); and
a second region (224b), having a width smaller than a width of the first region (224a), connected to the first region (224a), and
wherein the surface (210a) of the plate (210) is closer to the second region (224b) from among the first region (224a) and the second region (224b).

12. The case (200) of any one of claims 1 to 10,
wherein the plate (210) includes:
a first portion (211) on which the electronic device (100) is disposed;
a second portion (212) being foldable with respect to the first portion (211); and
a third portion (213) disposed between the first portion (211) and the second portion (212), and
wherein the storing member (220) is disposed on the third portion (213).

13. The case (200) of claim 12,
wherein a state of the case (200) includes:
a first state in which a direction in which an inner surface (211a) of the first portion (211) facing the electronic device (100) faces and a direction in which an inner surface (212a) of the second portion (212) faces are the same; and
a second state in which the inner surface (211a) of the first portion (211) and the inner surface (212a) of the second portion (212) face each other, and
wherein, in the first state, a step is formed at a boundary between the first portion (211) and the third portion (213).

14. The case (200) of any one of claims 1 to 13,
wherein the second actuating portion (226) includes at least one third magnet (226a) disposed between the first actuating portion (225) and the receiving space (224), and
wherein the at least one third magnet exerts an attractive force to at least one fourth magnet (132) that corresponds to the at least one third magnet (226a) and is disposed in the electronic pen (130).

15. The case (200) of any one of claims 1 to 14, further comprising:
a friction member (222a), disposed along an inner surface of the receiving space (224), in contact with a portion of the electronic pen (130) inserted into the receiving space (224).
